# EUROPÄISCHE PATENTANMELDUNG

(11) **EP 0 997 183 A1**
(43) Veröffentlichungstag der Anmeldung: **03.05.2000**
(21) Anmeldenummer: 99121237.4
(22) Anmeldetag: 25.10.1999
(51) Int. Cl.: B01F 3/04, C02F 3/22

(54) **Verfahren und Vorrichtung zur Begasung von Flüssigkeiten**

(30) Priorität: 28.10.1998 DE 19849697
(71) Anmelder: Strate Technologie für Abwasser GmbH, 31157 Sarstedt (DE)
(72) Erfinder: Lülfing, Frank, 29690 Lindwedel (DE)
(74) Vertreter: Läufer, Martina

(57) **Zusammenfassung**

Bei einem Verfahren zur Begasung von Flüssigkeiten wird ein aus zwei im stumpfen Winkel zueinander angeordneten Rohrelementen (12,14) zusammengesetzter Rohrbegaser (10) verwendet, der unter Nutzung des Druckluftheberprinzips eine Strömung in der zu begasenden Flüssigkeit erzeugt. Für die Gaszufuhr können Schlauchbegaser (20a,20b) verwendet werden. Der Rohrbegaser (10) ist beweglich in der zu begasenden Flüssigkeit angeordnet und führt während der Begasung eine zusätzliche Rührbewegung aus.

## Beschreibung

Die Erfindung betrifft ein Verfahren und eine Vorrichtung zur Begasung von Flüssigkeiten, bei welchem ein Begasungsmedium unterhalb der Flüssigkeitsoberfläche zugeführt wird.

In vielen Bereichen der Technik gibt es die Problemstellung, daß eine Flüssigkeit mit einem Gas, z.B. mit Luft, in innigen Kontakt gebracht werden soll, um eine Reaktion zwischen der Flüssigkeit und dem Gas oder beispielsweise auch eine Versorgung in flüssigem Medium befindlicher Mikroorganismen mit Gas zu ermöglichen. In Umkehrung dieses Vorgangs könnte beabsichtigt sein, das Gas zu waschen. Auch in diesem Fall müssen die beiden Phasen in möglichst engen, großflächigen Kontakt gebracht werden.

Für diese Zwecke sind eine Vielzahl verschiedener Begasungssysteme bekannt.

Zu dem vorgenannten Themenkreis gehört auch die Belüftung in biologischen Kläranlagen. Sie erfolgt i.a. in großen, runden, Begasungsbecken (Belebungsbecken), in denen die zu klärende Flüssigkeit gerührt und mit Luft oder einem anderen Begasungsmedium durchströmt wird. Um eine möglichst lange Verweilzeit für den Kontakt zwischen Gas und Flüssigkeit zu erreichen, wird das Gas/die Luft in dem Becken in etwa 4 bis 5 m Tiefe eingeleitet, und zwar im allgemeinen feinblasig, um die Grenzfläche zwischen Gas und Flüssigkeit zu vergrößern. Für dieses Einleiten von Gas ist daher ein erheblicher Druck erforderlich, der sich im Energieverbrauch für die Kläranlage niederschlägt.

Beim einfachen Einleiten von Luft/Gas in Form von Blasen, die in dem Medium frei beweglich sind, besteht ferner die Gefahr, daß sich die Blasen auf ihrem Weg an die Flüssigkeitsoberfläche vereinigen. Dies ist insbesondere bei der relativ kurzen Verweilzeit senkrecht nach oben perlender Blasen unerwünscht, da die Grenzflächensumme abnimmt und der Kontakt zwischen den Phasen schlechter wird.

Zusätzlich zu dem Einleiten von Luft über Belüftungsgitter, Schlauchbelüfter, Tellerbelüfter oder ähnliche im Stand der Technik bekannte Vorrichtungen ist es erforderlich, den Beckeninhalt zu rühren, um zu verhindern, daß sich in der Flüssigkeit vorhandener Schlamm absetzt. Dieses Rühren erfordert zusätzliche Energie.

Der Erfindung liegt daher die Aufgabe zugrunde, die Begasung von Flüssigkeiten unter effektiver Durchmischung der Phasen Gas und Flüssigkeit über eine längere Gasverweilzeit zu ermöglichen, wobei der Energieverbrauch sparsam sein soll.

Zur Lösung dieser Aufgabe ist erfindungsgemäß vorgesehen, daß bei einem Verfahren der eingangs genannten Art das Begasungsmedium der Flüssigkeit innerhalb wenigstens eines Rohrbegasers zugeführt wird, der unterhalb des Oberflächenspiegels der zu begasenden Flüssigkeit angeordnet ist und ein im wesentlichen waagerecht geführtes Rohrelement (Begaserrohr) und ein dazu im Winkel nach oben verlaufendes Rohrelement (Heberrohr) umfaßt, wodurch bei Begasung innerhalb des Rohres durch das in dem Heberrohr aufsteigende Gas eine Sogströmung erzeugt wird, die die zu begasende Flüssigkeit durch den Rohrbegaser treibt.

Erfindungsgemäß ist bei dem Verfahren vorgesehen, daß wenigstens ein Rohrbegaser verwendet und so innerhalb der Flüssigkeit angeordnet wird, daß das eine Rohrelement, das Begaserrohr, in der zu begasenden Flüssigkeit etwa waagerecht geführt wird, während das andere Rohrelement, das Heberrohr, von diesem abgehend schräg nach oben verläuft.

Innerhalb des Rohrbegasers ist in wenigstens einem Rohrelement eine Begasungseinrichtung vorgesehen, die z.B. aus ein oder mehreren Schlauchbegasern bestehen kann. Das Begasungsmedium - beispielsweise in Form von Druckluft - wird nun über die Begasungseinrichtung in den Rohrbegaser eingeleitet, und zwar vorzugsweise wenigstens in das etwa waagerecht verlaufende Begaserrohr. Da der gesamte Rohrbegaser an beiden Enden offen und in die zu begasende Flüssigkeit eingetaucht ist, befindet sich die Flüssigkeit auch innerhalb des Rohrbegasers und wird dort in Kontakt mit dem einströmenden Gas gebracht. Dabei wird das Gas durch die Begasungseinrichtung vorzugsweise über eine längere Strecke innerhalb des waagerecht verlaufenden Begaserrohrs eingebracht. Bereits durch den waagerechten Verlauf des Begaserrohres wird die Verweilzeit zwischen Gas- und Flüssigkeitsphase erhöht, da das Gas davon abgehalten wird auf direktem Wege aufzusteigen.

Innerhalb einer gewissen Anlaufzeit beginnt nun das Gas/Luft-Wassergemisch nach oben durch das Heberrohr zu entweichen. Durch das in dem Heberrohr aufsteigende Gas wird nach dem Prinzip eines Drucklufthebers ein Sog erzeugt, der die Flüssigkeit durch das Begaserrohr in Richtung Heberrohr nachströmen läßt. Bei dem hydrodynamischen Prinzip des Drucklufthebers erzeugt eine forcierte senkrecht nach oben verlaufende Gasströmung innerhalb einer Flüssigkeit einen Sog, der mit dem Gasdruck ansteigt. Dieser Effekt wird bei der Erfindung ausgenutzt, um die zu begasende Flüssigkeit umzuwälzen und durch den Rohrbegaser zu leiten bzw. durch das Begaserrohr einzusaugen. Der Effekt kommt zustande durch die spezielle, abgewinkelte Form des Rohrbegasers im ganzen. Die Kontaktzeit zwischen Gasphase und flüssiger Phase in dem Rohrbegaser wird einerseits durch die Länge des Begaserrohres (d.h. des einen Rohrelements) andererseits aber auch durch den Druck, mit dem das Gas über die Begasungseinrichtung zugeführt wird, und die Länge des Heberrohrs (des anderen Rohrelements) bestimmt. Diese Parameter können nach den Bedürfnissen des Einzelfalls eingestellt werden.

Vorzugsweise ist der wenigstens eine eine Strömung erzeugende Rohrbegaser beweglich angeordnet, so daß die Flüssigkeit während der Begasung durch den sich bewegenden Rohrbegaser gerührt wird.

Die vorzugsweise bewegliche Anordnung des Begasers in der zu begasenden Flüssigkeit kann beispielsweise durch Befestigung an einem drehbar gelagerten Arm erfolgen. Das Begasungsmedium kann dem Belüfter durch den Arm zugeführt werden. Es können mehrere Dreharme mit je ein oder mehreren strömungserzeugenden Belüftern vorgesehen sein. Während der Begasung entsteht innerhalb des Rohrbelüfters durch dessen Druckheberwirkung eine Strömung längs des Begasers. Das angesaugte Wasser wird aus dem Heberrohr ausgestoßen. Diese Saug-Ausstoß-Bewegung wirkt wie ein Antrieb für den beweglich gelagerten Rohrbegaser, so daß sich dieser mit einer von der Gaszufuhr abhängigen Geschwindigkeit innerhalb der zu begasenden Flüssigkeit fortbewegt. Durch die bewegliche Aufhängung des Begasers in der zu begasenden Flüssigkeit wird die Flüssigkeit zusätzlch gerührt bzw. bewegt. Die Ausnutzung des Gasdrucks des Begasungsmediums sowohl für die Durchmischung der zu begasenden Flüssigkeit als auch für die Zufuhr immer wieder neuer Flüssigkeit zum Begaser und für die Verwirbelung der Flüssigkeit mit dem Gas ist energetisch für das Gesamtverfahren äußerst günstig. Ein zusätzliches Rühren erübrigt sich, so daß durch zusätzliches Rühren entstehende Energieverluste am Rührer oder Rührermotor entfallen.

In vorteilhafter Ausgestaltung der Erfindung wird das Begasungsmedium während der Begasung mittels der Begasungseinrichtung nur über das im wesentlichen waagerecht geführte Rohrelement (Begaserrohr) zugeführt. Hierfür ist die Begasungseinrichtung dann nur in dem Begaserrohr angeordnet, das vorzugsweise länger als das Heberrohr ist.

Zur Verkürzung der Anlaufphase der Begasung kann das etwa waagerecht verlaufende Rohrelement leicht schräg und zum Heberrohr hin ansteigend angeordnet werden. Durch diese Maßnahme wird die Gasströmungsrichtung in der Anfangsphase zwangsweise in Richtung Heberrohr vorgegeben und der sich bei den jeweiligen Begasungsbedingungen einstellende Strömungsendzustand wird schneller erreicht.

Als Begasungsmedium können Luft oder Sauerstoff oder eine Mischung hieraus verwendet werden.

Das Verfahren läßt sich vorteilhaft in Kläranlagen-Belebungsbecken einsetzen. Als Begasungsmedium wird in dem Fall Luft verwendet.

Zur Lösung der oben genannten Aufgabe sieht die Erfindung ferner eine Vorrichtung zur Durchführung des vorstehend beschriebenen Verfahrens mit wenigstens einem Begasungsbecken oder
- behälter und wenigstens einer Begasungseinrichtung vor,
- bei welchem die wenigstens eine Begasungseinrichtung innerhalb wenigstens eines Rohrbegasers angeordnet ist,
- der aus einem an beiden Enden offenen Rohr besteht und unterhalb des Oberflächenspiegels der zu begasenden Flüssigkeit in dem Begasungsbecken oder -behälter angeordnet ist
- und der ein im wesentlichen waagerecht verlaufendes Rohrelement (Begaserrohr) und ein dazu im Winkel nach oben verlaufendes Rohrelement (Heberrohr) umfaßt.

Vorzugsweise bilden die Rohrelemente einen stumpfen Winkel untereinander.

Die in dem an beiden Enden offenen Rohr des Rohrbegasers angeordnete Begasungseinrichtung kann, wie oben schon beschrieben, aus wenigstens einem Schlauchbegaser bestehen. Schlauchbegaser sind aufgrund ihrer langgestreckten Form gut in ein Rohr einzupassen. Sie geben über die gesamte Rohrlänge, in der sie angeordnet sind, gleichmäßig und feinblasig Luft/Begasungsmedium ab.

Um den Kontakt zwischen Gas und Flüssigkeit innerhalb des Begaserrohres weiter zu verbessern und eine gewisse Verwirbelung innerhalb des Begaserrohres zu erzielen, kann die Begasungseinrichtung bezogen auf den Rohrquerschnitt exzentrisch angeordnet sein. Dies kann beispielsweise verwirklicht werden, indem z.B. ein oder mehrere Schlauchbelüfter in nicht gleichmäßiger Verteilung um den Umfang oder spiralförmig an der Rohrinnenwand des Rohrbelüfters angeordnet werden. Dies hat den Vorteil, daß durch die asymmetrische Anordnung eine zusätzliche Quer- insbesondere eine Kreisströmung in dem Rohr erzeugt wird, die das Vermischen von Flüssigkeit und Begasungsmedium (dem Gasauftrieb entgegenwirkend) verstärkt.

Die Begasungseinrichtung kann an verschiedenen Stellen in dem Rohr angeordnet sein, wenigstens in dem während des Begasungsvorgangs waagerecht verlaufenden Rohrelement (Begaserrohr), das vorteilhafterweise länger ist als das winklig von ihm nach oben abgehende Rohrelement (Heberrohr).

Im folgenden wird die Erfindung anhand von in der Zeichnung dargestellten Beispielen für Vorrichtungen zur Durchführung des mit wenigstens einem Rohrbegaser arbeitenden Begasungsverfahrens für Flüssigkeiten nochmals näher erläutert. In der Zeichnung zeigt:
- Fig. 1: eine Schnittansicht eines Ausführungsbeispiels der Vorrichtung nach der Erfindung;
- Fig. 2: der Rohrbelüfter aus der Vorrichtung gemäß Fig. 1 in einer Querschnittsansicht;
- Fig. 3: eine Vorrichtung zur Durchführung des erfindungsgemäßen Begasungsverfahrens mit mehreren Rohrbelüftern, wie in Fig. 1 dargestellt, in Draufsicht.

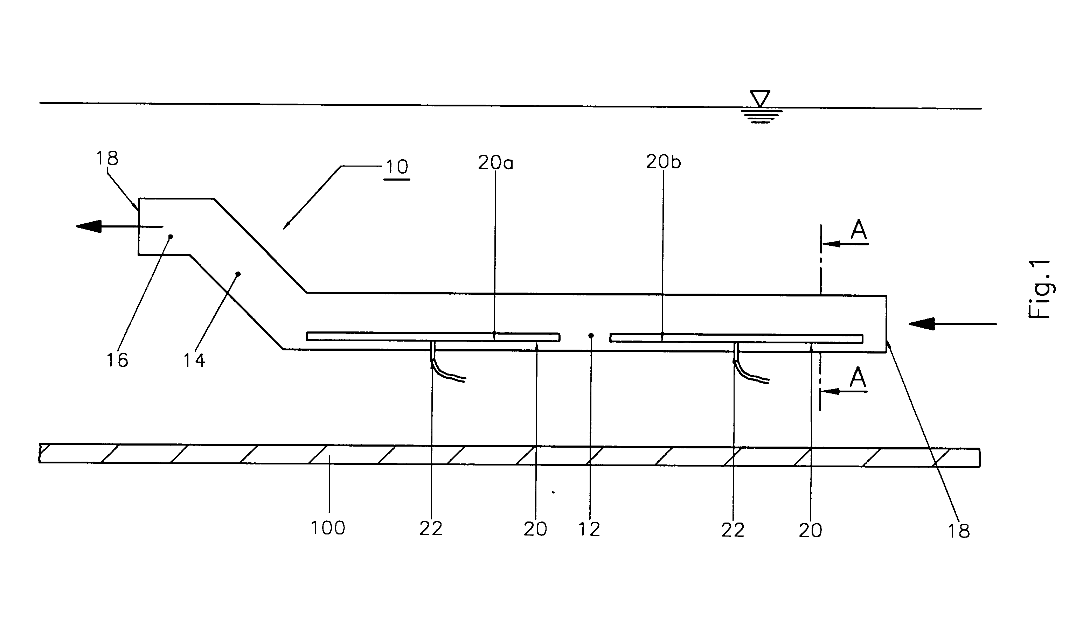

Figur 1 zeigt eine schematische Schnittansicht der erfindungsgemäßen Vorrichtung, bei der der im ganzen mit 10 bezeichnete Rohrbegaser innerhalb eines beliebigen Begasungsbeckens 100, von dem nur der Boden dargestellt ist, angeordnet ist. Die beiden Rohrelemente, Begaserrohr 12 und Heberrohr 14, sind im Winkel zueinander angeordnet. In diesem Ausführungsbeispiel bilden die Rohrelemente einen stumpfen Winkel, diese Anordnung ist jedoch nicht zwingend. Am Ende des Heberrohrs 14 schließt sich in diesem Beispiel ein Austrittsstutzen 16 an, durch den bei Betrieb des Rohrbegasers 10 das Wasser/Luft-Gemisch austritt. Beide Enden 18 des Rohrbegasers 10 sind offen. Die Begasungseinrichtung 20 im Innern des Rohrbelüfters 10 wird in diesem Ausführungsbeispiel durch zwei Schlauchbelüfter 20a, 20b gebildet, die über die Druckluft-Zuleitungen 22 mit Druckluft beaufschlagt werden können.

Zusätzlich ist in dieser Figur durch Angabe eines Wasserspiegels angedeutet, wie der Rohrbegaser bei Betrieb in dem Begasungsbecken 100 angeordnet sein kann. Die Strömungsrichtung, mit der die Flüssigkeit während der Begasung durch den Rohrbegaser strömt, ist durch die Pfeile an den zwei Enden 18 des Rohres angegeben.

Die Schlauchbegaser 20a, 20b versorgen die in dem Rohrbegaser befindliche Flüssigkeit praktisch über die gesamte Länge des Begaserrohres 12 mit durch die Schläuche ausdiffundierendem Gas. Durch den Gasauftrieb, den Gasdruck und die Druckheberwirkung im Heberrohr 14 stellt sich recht bald eine Strömung in Pfeilrichtung ein. Auch bei feststehendem Rohrbelüfter kann diese Strömung - z.B. in einem kleineren Becken oder Behälter 100 - zur Umwälzung der gesamten zu begasenden Flüssigkeit genutzt werden.

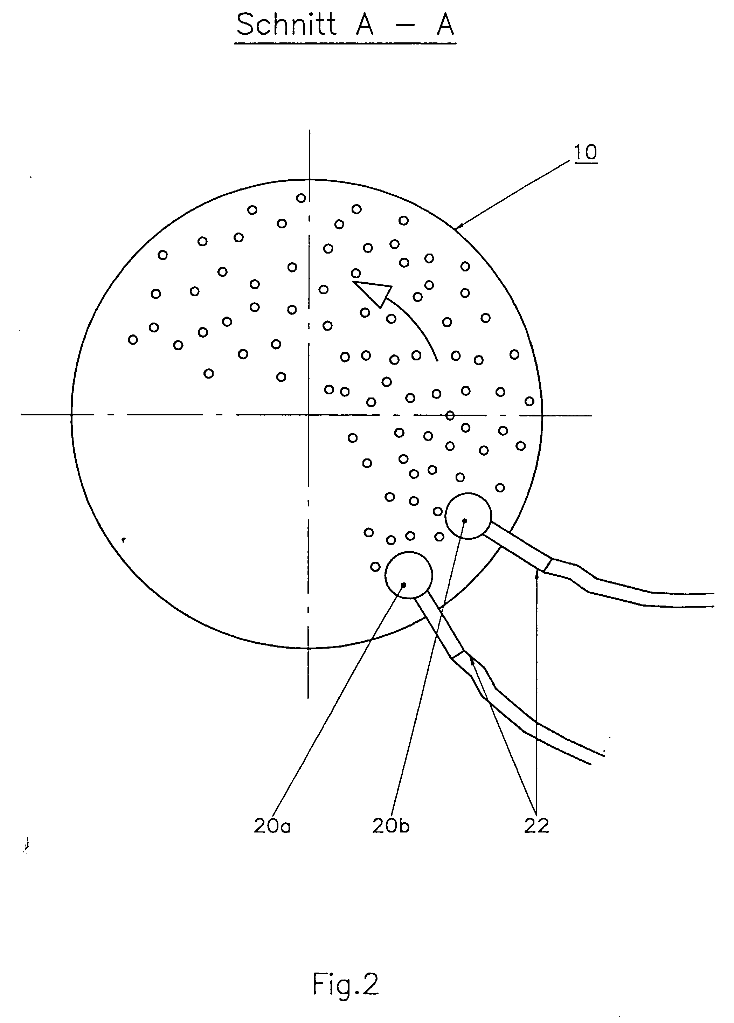

Figur 2 zeigt eine Querschnittsansicht des in Figur 1 dargestellten Rohrbelüfters 10, gesehen in Richtung der Pfeile A-A entlang der in Figur 1 angegebenen Schnittlinie. Man erkennt die in diesem Ausführungsbeispiel exzentrisch gewählte Anordnung der Begasungsseinrichtung 20 in Form der beiden Schlauchbegaser 20a, 20b. Hierdurch wird, wie durch die Pfeile in Figur 2 angedeutet, eine zusätzliche Strömung bzw. Verwirbelung der Flüssigkeit durch das einströmende Gas erzielt. Durch diese Maßnahme wird der Kontakt zwischen Gas und Flüssigkeit zusätzlich verbessert. Es wird verhindert, daß das Gas sich, infolge des Auftriebs, an der oberen Rohrinnenwand sammelt.

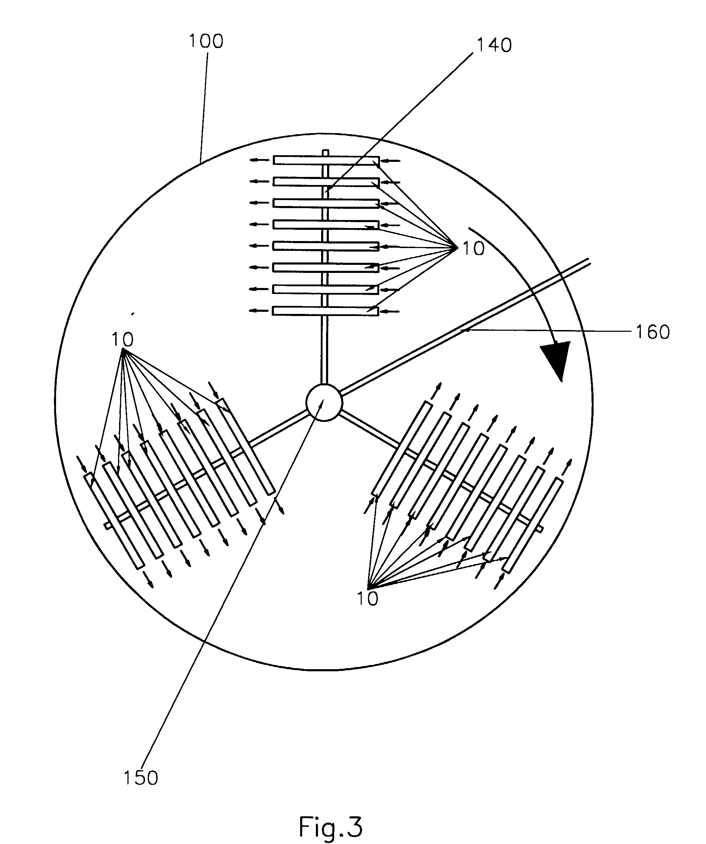

Figur 3 zeigt ein Ausführungsbeispiel für eine Vorrichtung zur Begasung von Flüssigkeiten mit Hilfe mehrerer der in Figuren 1 und 2 gezeigten Rohrbegaser 10. Es handelt sich um eine rotierende Begasung, durchgeführt in einem großen, runden Begasungsbecken 100. Die Rohrbelüfter 10 sind in drei Gruppen zu je sechs Stück an drei Verteilerarmen 140 starr befestigt. Die rohrförmigen Verteilerarme 140 gehen ihrerseits von einem zentral angeordneten Drehlager 150 ab. Bei der Begasung wird Druckluft über eine Druckluftleitung 160 dem Drehlager 150 zugeführt, wo sie über ein Rohrdrehgelenk in die rohrförmigen Verteilerarme 140 verteilt wird. Von den Verteilerarmen 140 aus wird die Druckluft durch die in der Zeichnung nicht näher dargestellten Druckluft-Zuleitungen 22 in die Rohrbegaser 10 und dort in die Begasungseinrichtungen 20 weitergeleitet. Der durch die Rohrbegaser 10 bei der Begasung erzeugte Rückstoß dreht die gesamte, drehbar gelagerte Rohrbegaser-Anordnung im Gegensinn zu dem erzeugten Rückstoß. Die drehbare Rohrbegaser-Anordnung ersetzt auf diese Weise einen zusätzlichen Rührer. Es ist nicht erforderlich, die hier gezeigte Rohrbegaser-Anordnung in einer Tiefe von 4 bis 5 m im Begasungsbecken anzuordnen, da die längere Gasverweilzeit für das hier gezeigte Begasungsverfahren die sonst notwendige Wasserhöhe über dem Begaser kompensiert. Die Energiekosten für die Begasung können hierdurch deutlich gesenkt werden.

## Patentansprüche

1. Verfahren zur Begasung von Flüssigkeiten, bei welchem ein Begasungsmedium unterhalb der Flüssigkeitsoberfläche zugeführt wird, **dadurch gekennzeichnet**,
daß das Begasungsmedium der Flüssigkeit innerhalb wenigstens eines Rohrbegasers (10) zugeführt wird,
der unterhalb des Oberflächenspiegels der zu begasenden Flüssigkeit angeordnet ist und ein im wesentlichen waagerecht geführtes Rohrelement (12) (Begaserrohr) und ein dazu im Winkel nach oben verlaufendes Rohrelement (14) (Heberrohr) umfaßt, wodurch bei Begasung innerhalb des Rohres durch das in dem Heberrohr (14) aufsteigende Gas eine Sogströmung erzeugt wird, die die zu begasende Flüssigkeit durch den Rohrbegaser (10) treibt.

2. Verfahren nach Anspruch 1, dadurch gekennzeichnet, daß der wenigstens eine eine Strömung erzeugende Rohrbegaser (10) beweglich angeordnet wird und die Flüssigkeit während der Begasung durch den sich bewegenden Rohrbegaser (10) gerührt wird.

3. Verfahren nach Anspruch 1 oder 2, dadurch gekennzeichnet, daß das Begasungsmedium während der Begasung mittels der Begasungseinrichtung (20) nur über das im wesentlichen waagerecht geführte Rohrelement (12) (Begaserrohr) zugeführt wird.

4. Verfahren nach einem der Ansprüche 1 bis 3, dadurch gekennzeichnet, daß das Begaserrohr (12) in der Flüssigkeit in von der Waagerechten leicht abweichender Schrägstellung zum Heberrohr ansteigend angeordnet wird.

5. Verfahren nach einem der Ansprüche 1 bis 4, dadurch gekennzeichnet, daß als Begasungsmedium Luft oder Sauerstoff oder eine Mischung hieraus verwendet wird.

6. Vorrichtung zur Begasung von Flüssigkeiten, wobei ein Begasungsmedium unterhalb der Flüssigkeitsoberfläche zugeführt wird, mit wenigstens einem Begasungsbecken oder -behälter (100) und wenigstens einer Begasungseinrichtung (20),
**dadurch gekennzeichnet,**
daß die wenigstens eine Begasungseinrichtung (20) innerhalb wenigstens eines Rohrbegasers (10) angeordnet ist,
der aus einem an beiden Enden offenen Rohr besteht und unterhalb des Oberflächenspiegels der zu begasenden Flüssigkeit in dem Begasungsbecken oder -behälter (100) angeordnet ist und der ein im wesentlichen waagerecht verlaufendes Rohrelement (12) (Begaserrohr) und ein dazu im Winkel nach oben verlaufendes Rohrelement (14) (Heberrohr) umfaßt.

7. Vorrichtung nach Anspruch 6, dadurch gekennzeichnet, daß die Rohrelemente (12, 14) im stumpfen Winkel zueinander angeordnet sind.

8. Vorrichtung nach Anspruch 6 oder 7, dadurch gekennzeichnet, daß die Begasungseinrichtung (20)aus wenigstens einem Schlauchbegaser (20a, 20b) besteht.

9. Vorrichtung nach einem der Ansprüche 6 bis 8, dadurch gekennzeichnet, daß die Begasungseinrichtung (20) exzentrisch bezogen auf den Rohrquerschnitt angeordnet ist.

10. Vorrichtung nach einem der Ansprüche 6 bis 9, dadurch gekennzeichnet, daß die Begasungseinrichtung (20, 20a, 20b) nur in einem der Rohrelemente (12, 14) angeordnet ist, wobei dieses (12) vorzugsweise länger als das andere Rohrelement (14) ist.
